# FASCICULE DE BREVET EUROPEEN

(11) **EP 4 323 701 B1**
(45) Date de publication et mention de la délivrance du brevet: **15.01.2025**
(21) Numéro de dépôt: 22722420.1
(22) Date de dépôt: 08.04.2022
(51) Int. Cl.: F24S 40/20, F24S 20/70, H02S 40/10

(54) **SYSTÈME ET PROCÉDÉ DE NETTOYAGE POUR CENTRALE À PANNEAUX SOLAIRES**
REINIGUNGSSYSTEM UND -VERFAHREN FÜR EIN SOLARKRAFTWERK
CLEANING SYSTEM AND METHOD FOR A SOLAR POWER PLANT

(30) Priorité: 12.04.2021 FR 2103865
(43) Date de publication de la demande: 21.02.2024
(73) Titulaire: Commissariat à l'Energie Atomique et aux Energies Alternatives, 75015 Paris (FR)
(72) Inventeur: PILAT, Eric, 38054 Grenoble Cedex 09 (FR)
(74) Mandataire: Hautier IP
(86) Numéro de dépôt international: PCT/EP2022/059499
(87) Numéro de publication internationale: WO 2022/218870

(56) Documents cités:
- WO-A2-2009/001225
- CN-U- 204 231 280
- KR-A- 20210 021 690
- US-A1- 2017 133 978
- US-A1- 2019 372 513

## Description

### DOMAINE TECHNIQUE DE L'INVENTION

La présente invention concerne le nettoyage pour centrale à panneaux solaires, en particulier à panneaux photovoltaïques.

### ÉTAT DE LA TECHNIQUE

Actuellement, il existe différents panneaux solaires pour produire de l'énergie. Un panneau solaire, est un dispositif convertissant une partie du rayonnement solaire en énergie thermique ou électrique, grâce à des capteurs solaires thermiques ou des cellules photovoltaïques respectivement. En particulier, certains panneaux solaires sont hybrides et combinent les deux technologies précédemment citées pour produire à la fois de l'électricité et de la chaleur. Le regroupement de nombreux panneaux solaires à un même endroit est dénommé centrale.

En outre, le développement des nouvelles centrales se heurte à la nécessité de préserver au maximum les terres potentiellement cultivables. Pour cette raison, il y a aujourd'hui une forte tendance à implanter de nouvelles centrales photovoltaïques sur l'eau, au-dessus de bassins artificiels, réservoirs, barrages, ou canaux. Ces types de centrales sont appelées « centrales flottantes » pour les distinguer des « centrales terrestres » où les panneaux solaires sont ancrés au sol.

Une des particularités des centrales flottantes réside dans le fait que les panneaux reposent sur des flotteurs ancrés. Cette configuration permet de maintenir l'ensemble de la centrale dans une situation relativement stable. Par contre, il est difficile de maintenir un niveau, voire l'orientation ou l'inclinaison des panneaux stable. La hauteur relative d'un panneau par rapport aux panneaux adjacents peut varier de plusieurs centimètres et degrés en fonction de la houle, du passage d'un bateau à moteur à proximité, ou du fait d'une surcharge pondérale ponctuelle, par exemple un regroupement d'oiseaux. Cette variation aléatoire de positionnement des panneaux les uns par rapport aux autres pose différents problèmes, en particulier pour le nettoyage des panneaux.

Par ailleurs, les centrales attirent des colonies d'oiseaux qui peuvent salir par leurs fientes les panneaux solaires. Il est donc nécessaire d'utiliser des moyens de nettoyage adaptés pour maintenir le fonctionnement des centrales.

Les centrales peuvent être équipées d'arroseurs répartis sur les bords des panneaux pour un nettoyage par pulvérisation de liquide. Mais il faut disposer de nombreux arroseurs le long des panneaux. En outre, le nettoyage est peu efficace, car les fientes d'oiseaux ne peuvent pas être nettoyées correctement par un simple jet de liquide.

Certaines centrales sont équipées de robots de nettoyage automatisés. On peut citer, par exemple, la demande internationale WO 2009/001225.

Par exemple, les robots sont munis de brosses, de roues d'entrainement et de galets rotatifs de guidage situés au contact des bords des panneaux solaires afin de guider les robots le long des panneaux. Mais ces robots sont prévus pour le nettoyage d'un seul panneau et ne peuvent pas passer d'une rangée de panneaux à l'autre.

Certains robots sont autonomes et peuvent se déplacer suivant une trajectoire définie enregistrée en mémoire. En général, ils sont équipés de capteurs afin d'éviter de tomber ou d'heurter un obstacle. Mais ces robots ne peuvent pas non plus passer d'un panneau à l'autre sans intervention humaine.

**Il** existe encore des centrales qui utilisent des drones de nettoyage pour pulvériser du liquide sur les panneaux. Mais ces drones doivent être guidés par une personne pendant le nettoyage. Ils peuvent éventuellement être auto guidés par un programme de guidage, mais un tel programme est complexe pour assurer une conduite robuste et une autonomie complète du drone. En outre, il est nécessaire d'équiper le drone d'éléments électroniques complexes pour contrôler son vol, notamment à l'aide d'un système de géolocalisation par satellite, et pour détecter les obstacles. Le drone doit être muni de batteries suffisamment puissantes pour lui permettre d'assurer un nettoyage complet de plusieurs panneaux répartis sur plusieurs rangées. La distance du drone par rapport aux panneaux solaires est difficile à maintenir constante. Ainsi, ces drones sont plutôt équipés d'un diffuseur de liquide ou d'air afin de fournir un nettoyage à distance et peuvent être difficilement équipés de brosses qui nécessitent un contact permanent entre le drone et le panneau solaire.

On peut en outre citer les documents de brevet KR20210021690, CN204231280 et US2019/372513, qui divulguent un robot tracté par des câbles pour nettoyer un unique panneau solaire sur lequel il est monté.

On peut également citer la demande de brevet américain US2017/133978, qui divulgue un système de nettoyage de panneaux solaires, comprenant un cadre principal, un chariot de nettoyage et un tambour rotatif qui enroule et déroule des câbles métalliques isolés pour tracter le chariot de nettoyage le long du cadre. Par ailleurs, le système de nettoyage peut être déplacé d'une rangée de panneaux solaires à l'autre par un système de rails et d'aiguillage fonctionnant comme des rails de chemin de fer. Mais un tel système de nettoyage est complexe à réaliser.

### RÉSUMÉ DE L'INVENTION

Un objet de l'invention consiste à pallier ces inconvénients, et plus particulièrement à fournir des moyens de nettoyage pour panneaux solaires munis de dispositifs de nettoyage aptes à passer d'un panneau à l'autre et qui sont simples à réaliser.

Un autre objet de l'invention consiste à fournir des moyens de nettoyage adaptés pour des centrales flottantes comme terrestres.

Les autres objets, caractéristiques et avantages de la présente invention apparaîtront à l'examen de la description suivante et des dessins d'accompagnement.

Selon un aspect de l'invention, il est proposé un système de nettoyage pour centrale à panneaux solaires, comprenant au moins un dispositif de nettoyage d'au moins un panneau solaire.

Le système comporte un appareil de transport dudit au moins un dispositif de nettoyage par câble tracteur.

L'appareil de transport comporte une poulie d'entrainement du câble tracteur et une poulie de renvoi du câble tracteur, le câble tracteur étant entrainé en continu autour des poulies d'entrainement et de renvoi.

L'appareil de transport comporte en outre une poulie de déviation du câble tracteur et ledit au moins un dispositif de nettoyage est relié au câble tracteur par une pince de fixation configurée pour passer au niveau des poulies d'entrainement, de déviation et de renvoi.

Ainsi, on fournit des moyens de nettoyage automatisés, c'est-à-dire qui ne nécessitent pas d'intervention humaine pour déplacer les dispositifs de nettoyage d'un panneau à l'autre. En outre, le système est particulièrement adapté pour une centrale flottante dans laquelle la hauteur des panneaux solaires peut être variable.

Le système peut comprendre une potence portant un élément rotatif de support et de guidage du câble tracteur.

La potence peut être escamotable. Ainsi, on peut réduire la part d'ombre projetée par la potence lorsque l'appareil de transport n'est pas en fonctionnement.

Ledit au moins un dispositif de nettoyage peut comporter un élément de nettoyage motorisé et une unité d'entrainement configurée pour entrainer en fonctionnement l'élément de nettoyage motorisé.

Selon un mode de réalisation, l'unité d'entrainement est électrique et ledit au moins un dispositif de nettoyage comporte une unité de stockage d'énergie électrique couplée à l'unité d'entrainement.

Selon un autre mode de réalisation, l'unité d'entrainement est électrique et l'appareil de transport comporte un générateur d'énergie électrique couplé à l'unité d'entrainement par l'intermédiaire de fils électriques situés le long du câble tracteur.

Selon un autre aspect, il est proposé une centrale à panneaux solaires comportant un système de nettoyage tel que défini ci-avant.

Selon un mode de réalisation, chaque panneau solaire comporte un élément d'ancrage flottant.

Avantageusement, chaque panneau solaire est un panneau photovoltaïque.

Selon un autre mode de réalisation, chaque panneau solaire comporte un élément d'ancrage au sol.

Selon encore un autre aspect, il est proposé un procédé de nettoyage pour centrale à panneaux solaires.

Le procédé comporte une traction d'au moins un dispositif de nettoyage d'au moins un panneau solaire par câble tracteur.

### BRÈVE DESCRIPTION DES FIGURES

D'autres avantages et caractéristiques ressortiront plus clairement de la description qui va suivre de modes de réalisation et de mise en œuvre de l'invention donnés à titre d'exemples non limitatifs et représentés aux dessins annexés, dans lesquels :
La figure 1, illustre schématiquement une vue latérale d'un mode de réalisation d'un système de nettoyage pour centrale à panneaux solaires ;
La figure 2, illustre schématiquement une vue de dessus d'un mode de réalisation du système de nettoyage ;
La figure 3, illustre schématiquement une vue de dessus d'un autre mode de réalisation du système de nettoyage ;
Les figures 4 à 8, illustrent de façon schématique des vues en perspective de différents modes de réalisation d'un dispositif de nettoyage ;
La figure 9, illustre schématiquement une vue latérale d'une potence en position déployée ;
La figure 10, illustre schématiquement une vue latérale d'une potence en position intermédiaire ;
La figure 11, illustre schématiquement une vue latérale d'un mode de réalisation d'une potence en position rétractée ;
La figure 12, illustre schématiquement une vue latérale d'un autre mode de réalisation d'une potence en position rétractée ;
La figure 13, illustre schématiquement une vue de dessus d'un autre mode de réalisation d'un système de nettoyage ;
La figure 14, illustre schématiquement une vue en coupe d'un mode de réalisation du système de nettoyage ;
La figure 15, illustre schématiquement une vue en coupe d'un autre mode de réalisation du système de nettoyage ;
La figure 16, illustre schématiquement une vue en perspective du mode de réalisation illustré à la figure 15 ;
La figure 17, illustre schématiquement un autre mode de réalisation du système de nettoyage ;
La figure 18, illustre schématiquement une vue en coupe d'un mode de réalisation d'un câble tracteur ;
La figure 19, illustre schématiquement une vue en coupe d'un mode de réalisation d'une pince de fixation ;
La figure 20, illustre schématiquement une vue en coupe d'un autre mode de réalisation d'une pince de fixation ;
Les figures 21 à 23, illustrent de façon schématique des vues latérales de différentes positions d'une potence ;
La figure 24, illustre schématiquement une vue en perspective d'un autre mode de réalisation du système de nettoyage ; et
La figure 25, illustre schématiquement une vue de face du mode de réalisation illustré à la figure 24.

### DESCRIPTION DÉTAILLÉE DE L'INVENTION

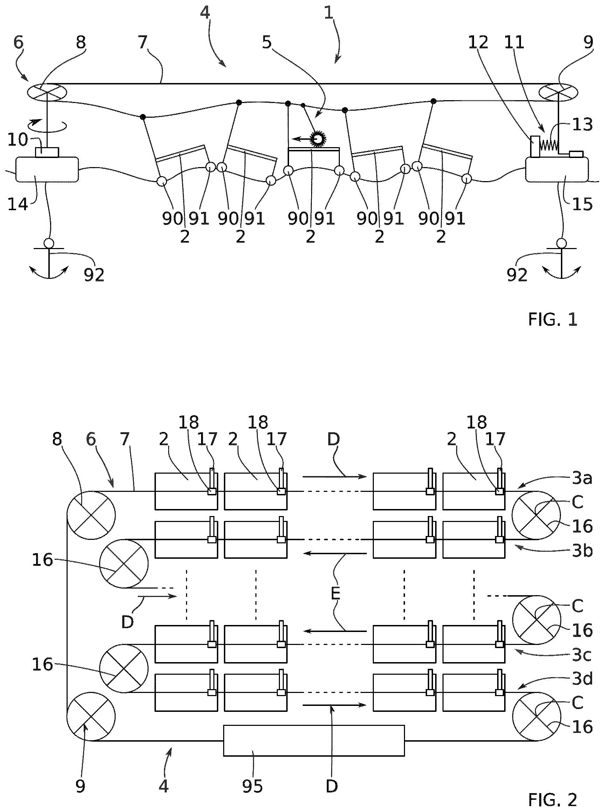

Sur les figures 1 à 3, on a représenté une centrale 1 à panneaux solaires 2. Les panneaux solaires 2 peuvent être des panneaux thermiques, c'est-à-dire des panneaux comprenant des capteurs solaires thermiques pour transformer une partie du rayonnement solaire en chaleur. De préférence, les panneaux solaires 2 sont des panneaux photovoltaïques, également appelés modules photovoltaïques, c'est-à-dire qu'ils comportent des cellules photovoltaïques pour convertir une partie du rayonnement solaire en énergie électrique. De façon générale, la centrale 1 comprend plusieurs panneaux solaires 2. Avantageusement, les panneaux solaires 2 sont répartis sur plusieurs rangées 3a à 3d. Sur la figure 2, on a représenté, à titre d'exemple, au moins quatre rangées 3a à 3d. Chaque rangée 3a à 3d peut comprendre plusieurs panneaux solaires 2, de préférence alignés. Sur la figure 2, chaque rangée 3a à 3d comprend au moins quatre panneaux solaires 2. Un panneau solaire 2 a une forme générale d'un parallélépipède. Par ailleurs, chaque panneau solaire 2 comporte au moins un support 90, 91 configuré pour supporter le panneau solaire 2. Les supports 90, 91 peuvent être ancrés ou posés sur le sol, et dans ce cas la centrale 1 est dite « terrestre ». En variante, les supports 90, 91 sont des flotteurs destinés à être posés sur l'eau, et dans ce cas la centrale 1 est dite « flottante ». On dit également que les supports 90, 91 sont flottants.

En particulier, la centrale 1 comprend un système de nettoyage 4 configuré pour nettoyer les panneaux solaires 2. Le système de nettoyage 4 comprend au moins un dispositif de nettoyage 5 apte à nettoyer au moins un panneau solaire 2. Plus particulièrement, le système de nettoyage 4 comporte un appareil de transport 6 configuré pour transporter les dispositifs de nettoyage 5 par câble tracteur 7. Sur la figure 1, on a représenté un seul dispositif de nettoyage 5 à des fins de simplification. L'appareil de transport 6 permet de tracter les dispositifs de nettoyage 5 et favorise le transfert des dispositifs de nettoyage 5 d'un panneau solaire 2 à l'autre.

L'appareil de transport 6 comprend le câble tracteur 7, une poulie d'entrainement 8, au moins une poulie de renvoi 9, un moteur 10 et un dispositif de mise en tension 11 du câble tracteur 7. La poulie d'entrainement 8 est configurée pour entrainer le câble tracteur 7 lorsqu'elle est animée en rotation autour d'un axe de rotation A. Le moteur 10 est couplé à la poulie d'entrainement 8 et permet de l'animer en rotation autour de l'axe de rotation A. La poulie de renvoi 9 permet, à l'aide du dispositif de mise en tension 11, de mettre le câble tracteur 7 en tension pour faciliter le déplacement du câble tracteur 7. Le dispositif de mise en tension 11 comprend un élément d'appui 12 et un vérin hydraulique 13 qui relie l'élément d'appui 12 à un axe de rotation B de la poulie de renvoi 9. Le vérin hydraulique 13 peut adapter la tension qu'il exerce sur l'axe de rotation B, et permet donc de faire varier la tension du câble tracteur 7. Le câble tracteur 7 peut être réalisé en acier, par exemple à partir de torons rassemblés en forme d'hélice. Le câble tracteur 7 peut également être réalisé en nylon, à un brin ou à plusieurs brins rassemblés en forme d'hélice et formant des torons. En variante, le câble tracteur 7 peut être enveloppé d'une gaine en matière plastique. En outre, le moteur 10 est monté sur un châssis moteur 14 et l'axe de rotation B de la poulie de renvoi 9 est monté sur un châssis support 15. Dans un mode de réalisation, le système de nettoyage 4 comprend une poulie de renvoi 9 et une poulie d'entrainement 8. Ainsi on peut nettoyer au moins une rangée 3a de panneaux solaires 2. Le moteur 10 peut animer en rotation la poulie d'entrainement 8 selon un unique sens de rotation. Dans ce cas les dispositifs de nettoyage 5 parcourent la boucle formée par le câble tracteur 7 toujours dans le même sens. En variante, le moteur 10 peut inverser le sens de rotation de la poulie d'entrainement 8, et les dispositifs de nettoyage 5 peuvent parcourir la boucle dans un sens et dans l'autre. Dans ce cas, on dit que l'appareil de transport 6 fonctionne en va-et-vient.

Selon l'invention, le système de nettoyage 4 comprend une ou plusieurs poulies de déviation 16 pour dévier la trajectoire du câble tracteur 7. Les poulies de déviation 16 permettent de nettoyer plusieurs rangées de panneaux solaires 2. Chaque poulie de déviation 16 est également montée en rotation autour d'un axe de rotation C. Les axes de rotation C des poulies de déviation 16 sont montés respectivement sur des châssis support non représentés à des fins de simplification. Par ailleurs, dans le cas d'une centrale 1 terrestre, les châssis moteur 14 et support 15 sont des éléments d'ancrage fixés au sol. Dans le cas d'une centrale 1 flottante, les châssis moteur 14 et support 15 des poulies de déviation 16 et de renvoi 9, sont des flotteurs posés sur l'eau et équipés de systèmes d'ancrage 92 pour maintenir les châssis 14, 15 en position. En variante, les supports 90, 91 des panneaux solaires 2 peuvent être également munis de système d'ancrage 92.

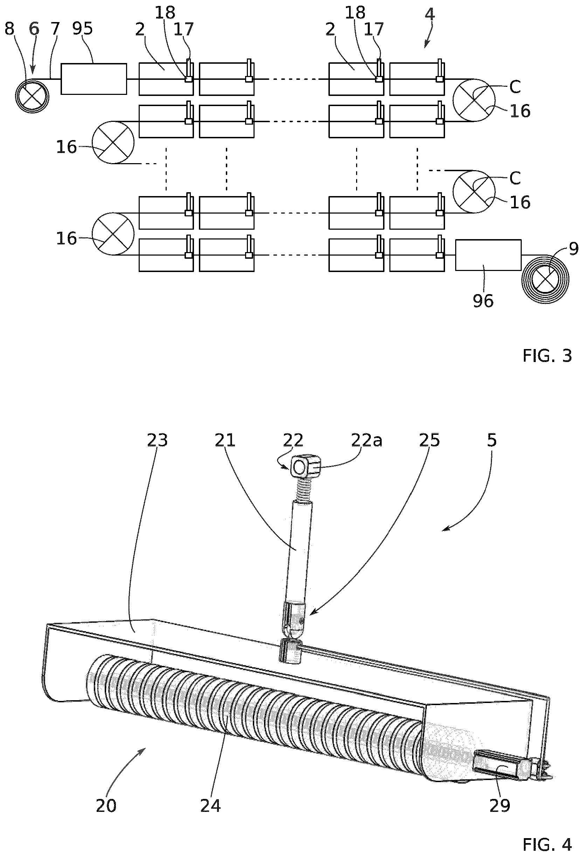

Sur les figures 2 et 3, on a représenté plusieurs panneaux solaires 2 répartis sur plusieurs rangées 3a à 3d. Chaque rangée 3a, 3d comprend plusieurs panneaux solaires 2. De préférence, les panneaux solaires 2 d'une rangée 3a à 3d sont alignés, c'est-à-dire qu'ils sont disposés les uns à côté des autres successivement le long d'une direction D, E, dite direction d'alignement. Par exemple, comme illustré sur la figure 3, les panneaux solaires 2 d'une première rangée 3a sont alignés selon la première direction D. Les panneaux solaires 2 d'une deuxième rangée 3b sont alignés selon la deuxième direction E. Préférentiellement, les rangées 3a à 3d sont disposées parallèlement, en d'autres termes les rangées 3a à 3d sont dites parallèles entre elles. C'est-à-dire que les directions d'alignement D, E des panneaux solaires 2 sont parallèles. L'ensemble des panneaux solaires 2 forment une série. La série comprend les panneaux solaires 2 des différentes rangées 3a à 3d. L'appareil de transport 6 est configuré de manière que le câble tracteur 7 est disposé le long des différentes rangées 3a à 3d de panneaux solaires 2. Le système de nettoyage 4 peut comprendre plusieurs poulies de déviation 16. De préférence, une poulie de déviation 16 est située au bout d'une rangée 3a à 3d. Préférentiellement, une poulie de déviation 16 est située au bout de deux rangées 3a à 3d successives. A chaque passage d'une poulie de déviation 16, le câble tracteur 7 change de direction. Une poulie de déviation 16 permet donc au câble tracteur 7 de passer d'une rangée 3a à 3d à l'autre. En particulier, le câble tracteur 7 est positionné de sorte qu'il relie la poulie d'entraînement 8 à la poulie de renvoie 9 en passant au contact de chaque poulie de déviation 16. Plus particulièrement, les poulies d'entrainement 8, de renvoi 9 et de déviation 16 sont configurées de sorte à positionner le câble tracteur 7 pour qu'il passe au niveau de, c'est-à-dire au-dessus de, chaque panneau solaire 2. En d'autres termes, le câble tracteur 7 s'étend le long des différentes rangées 3a à 3d, c'est-à-dire le long des différentes directions d'alignement D, E. La position du câble tracteur 7 permet un changement de rangées 3a, 3d pour le dispositif de nettoyage 5. Ainsi, lorsque le câble tracteur 7 est animé en déplacement, il permet de tracter un dispositif de nettoyage 5 d'un panneau solaire 2 à l'autre, et plus particulièrement d'une rangée 3a à 3d à l'autre pour nettoyer plusieurs rangées 3a à 3d de panneaux solaires 2. On entend par plusieurs rangées 3a à 3d, le fait que plusieurs panneaux solaires 2 appartenant respectivement à plusieurs rangées 3a à 3d, sont disposés les uns à côté des autres selon une direction perpendiculaire aux directions d'alignement D, E. En d'autres termes, les poulies de déviation 16 permettent un changement de direction D, E du câble tracteur 7 pour permettre au dispositif de nettoyage 5 de changer de rangées 3a à 3d. Les poulies de déviation 16 permettent de nettoyer une série de panneaux solaires de différentes rangées 3a à 3d, de préférence parallèles. Ainsi on peut nettoyer plusieurs rangées 3a à 3d de panneaux solaires 2.

Un tel appareil de transport 6 permet d'utiliser un moteur 10 déporté pour entrainer les dispositifs de nettoyage 5. C'est-à-dire que le moteur 10 est situé à distance des dispositifs de nettoyage 5. En outre, grâce à l'appareil de transport 6, on utilise un seul moteur 10 pour déplacer les dispositifs de nettoyage 5. La maintenance du système de nettoyage 4 est donc plus simple. En outre, les dispositifs de nettoyage 5 ne sont pas nécessairement équipés de roues, de moteurs d'entrainement, ni d'équipements électroniques pour contrôler leur positionnement et pour contrôler les obstacles. Les dispositifs de nettoyage 5 peuvent donc être plus légers et plus simple à réaliser.

Selon un mode de réalisation illustré à la figure 2, le câble tracteur 7 forme une boucle continue et passe autour des poulies d'entrainement 8, de renvoi 9 et de déviation 16. En d'autres termes, le câble tracteur 7 est au contact de chacune des poulies 8, 9, 16. Sur la figure 2, on a représenté à titre d'exemple cinq poulies de déviation 16. Lorsque la poulie d'entrainement 8 est animée en rotation, elle entraine le câble tracteur 7 en translation selon une première direction, représentée par la référence D, notamment depuis la poulie d'entrainement 8 vers une première poulie de déviation 16. En outre, le câble tracteur 7 est animé en translation dans une deuxième direction inverse E à la première direction D, notamment entre la première poulie de déviation 16 et une deuxième poulie de déviation. A chaque passage d'une poulie de déviation, le câble tracteur 7 change de direction. Le système de nettoyage 4 peut également comprendre au moins un quai 95, 96 comme point de départ et/ou d'arrivée des dispositifs de nettoyage 5. Sur la figure 2, le quai 95 correspond au point de départ et d'arrivée des dispositifs 5.

Sur la figure 3, on a représenté un autre mode de réalisation de la centrale 1, dans lequel le câble tracteur 7 est enroulé autour de la poulie d'entrainement 8. Dans ce cas, le câble tracteur 7 ne forme pas une boucle continue mais un unique brin qui est enroulé et déroulé, à l'aide de la poulie d'entrainement 8, pour changer le sens des première et deuxième directions D, E. Dans le cas d'un système d'entrainement 4 ayant un câble tracteur 7 à un brin unique, le moteur 10 peut inverser le sens de rotation de la poulie d'entrainement 8, et l'appareil de transport 6 fonctionne en va-et-vient. En outre, le système de nettoyage 4 peut comprendre un quai de départ 95 des dispositifs et un quai d'arrivée 96 des dispositifs 5.

De façon générale, le câble tracteur 7 est un câble aérien, c'est-à-dire que le câble tracteur 7 est maintenu en l'air. Pour améliorer le maintien en l'air du câble tracteur 7, le système de nettoyage 4 peut comporter une ou plusieurs potences 17. Une potence 17 est un élément de support du câble tracteur 7. En particulier, une potence 17 porte un ou plusieurs éléments rotatifs 18, 80. Un élément rotatif 18, 80 est un élément monté en rotation sur la potence 17, configuré pour supporter et guider le câble tracteur 7. Par exemple, les éléments rotatifs 18, 80 sont des galets rotatifs, c'est-à-dire des cylindres à section circulaire et munis d'une gorge pour faciliter le guidage du câble tracteur 7. Lorsque le câble tracteur 7 est en mouvement, les galets rotatifs 18 sont animés en rotation sur la potence 17 qui les porte. De préférence, chaque panneau solaire 2 est équipé d'une potence 17. Une potence 17 peut être montée sur un bord d'un panneau solaire 2. Plus particulièrement, chaque potence 17 est montée à une extrémité d'un panneau solaire 2.

Sur les figures 4 à 8, on a représenté des modes de réalisation d'un dispositif de nettoyage 5. De façon générale, le dispositif de nettoyage 5 comporte un élément de nettoyage 20, une perche 21 reliée à l'élément de nettoyage 20 et un moyen de fixation 22 relié à la perche 21. Les différentes parties 20, 21 et 22 du dispositif de nettoyage 5 sont reliées mécaniquement entre elles. La perche 21 est un élément allongé, par exemple un élément cylindrique, de préférence une tige. Avantageusement, la perche 21 peut comprendre une tige filetée et un tube taraudé destiné à coopérer avec la tige filetée. Ainsi, la perche 21 peut avoir une longueur constante réglable en fonction d'une distance entre le câble tracteur 7 et le panneau solaire 2. La perche 21 peut également être télescopique ou comprendre un enrouleur. Ainsi, la perche 21 peut avoir une longueur variable pour s'adapter à des différences de distance entre le câble tracteur 7 et les panneaux solaires 2. La perche 21 peut en outre comprendre un système d'amortissement, par exemple un vérin hydraulique ou pneumatique pour éviter d'endommager les panneaux solaires 2 lorsque les dispositifs de nettoyage 5 sont au contact des panneaux solaires 2. Le moyen de fixation 22 est configuré pour accrocher la perche 21 au câble tracteur 7. Le moyen de fixation 22 est situé de préférence à une extrémité de la perche 21. Selon l'invention, le moyen de fixation 22 comprend une pince de fixation 22a. De façon générale, la pince de fixation 22a est configurée pour passer au niveau des poulies d'entrainement 8, de renvoi 9 et de déviation 16.

Lorsqu'on déplace le câble tracteur 7, on entraine le ou les dispositifs de nettoyage 5 accrochés au câble tracteur 7. Le déplacement du ou des dispositifs de nettoyage 5 permet de nettoyer la surface des panneaux solaires 2.

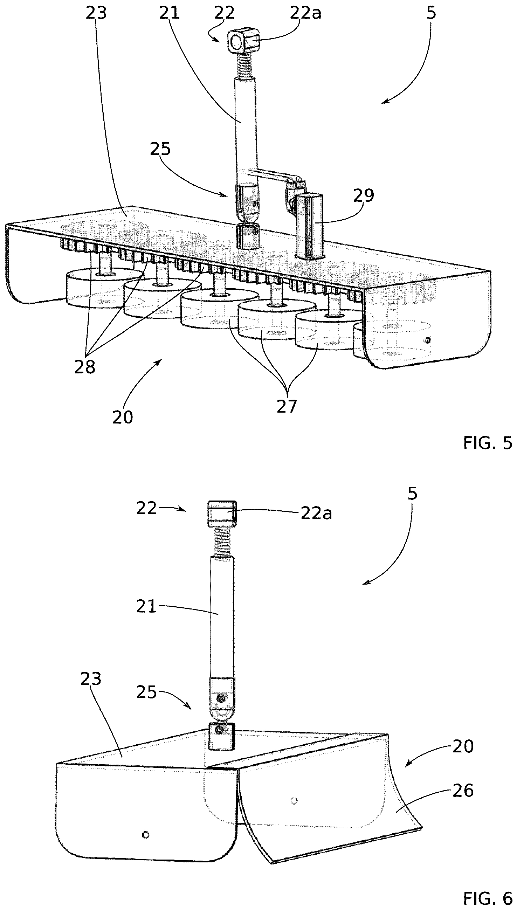

L'élément de nettoyage 20 peut être mobile. Par exemple, comme illustré à la figure 4, l'élément de nettoyage 20 comprend un châssis 23 sur lequel est montée une brosse rotative 24, avantageusement plusieurs brosses rotatives. La brosse rotative 24 peut être fabriquée avec des fibres synthétiques ou des poils d'animaux. La perche 21 peut être montée sur le châssis 23 par l'intermédiaire d'une articulation 25. Ainsi, lorsqu'on déplace le dispositif de nettoyage 5 en contact avec un panneau solaire 2, les brosses rotatives 24 sont animées en rotation par frottement et peuvent éliminer les salissures présentes sur la surface du panneau solaire 2. En variante, le dispositif de nettoyage 5 peut comporter une unité d'entrainement 29, par exemple un moteur électrique, configurée pour entrainer en fonctionnement la brosse rotative 24 afin d'améliorer le nettoyage. Selon un autre mode de réalisation, illustré à la figure 6, le dispositif de nettoyage 5 comporte une raclette 26 montée sur le châssis 23. La raclette 26 peut être une plaque en caoutchouc, en silicone, ou en matière plastique souple.

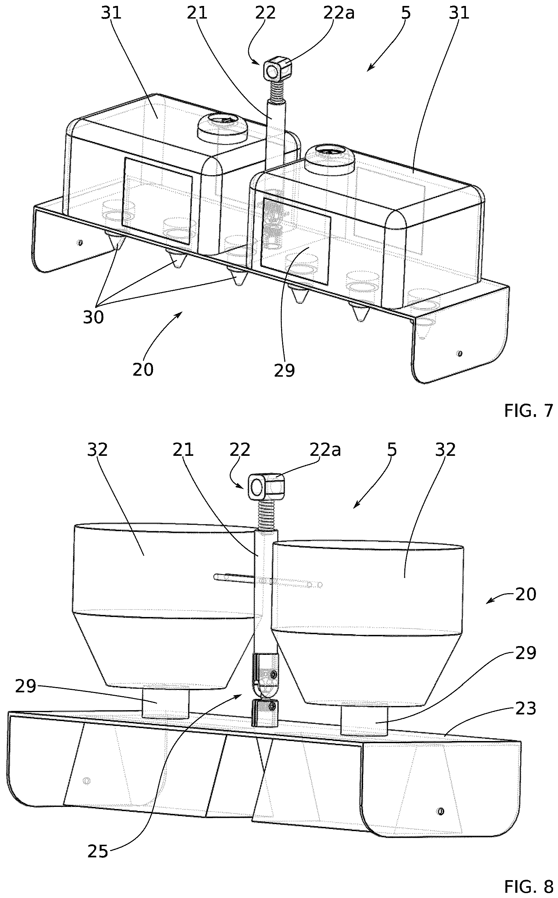

L'élément de nettoyage 20 peut en outre être motorisé, comme illustré sur les figures 5, 7 et 8. Dans ce cas, le dispositif de nettoyage 5 comporte une unité d'entrainement 29, par exemple un moteur électrique, configurée pour entrainer en fonctionnement l'élément de nettoyage 20. Sur la figure 5, on a représenté un mode de réalisation dans lequel l'élément de nettoyage 20 comporte un ou plusieurs palets rotatifs 27. Le ou les palets rotatifs 27 sont entrainés par une ou plusieurs roues dentées 28. Les palets rotatifs 27 peuvent être orientés parallèlement au châssis 23. Dans ce mode de réalisation, l'unité d'entrainement 29 entraine les roues dentées 28 en rotation, et donc les palets rotatifs27. En variante, illustrée à la figure 7, le dispositif de nettoyage 5 comporte une ou plusieurs buses 30 reliées à un ou plusieurs récipients 31, et pilotées par l'unité d'entrainement 29. Les récipients 31 peuvent comporter un liquide ou un gaz. Les buses 30 sont configurées pour produire un jet de liquide ou de gaz contenus dans le ou les récipients 31. Selon encore un autre mode de réalisation, illustré à la figure 8, l'élément de nettoyage 20 comporte un ou plusieurs aspirateurs 32 mis en fonctionnement par l'unité d'entrainement 29 pour aspirer les salissures.

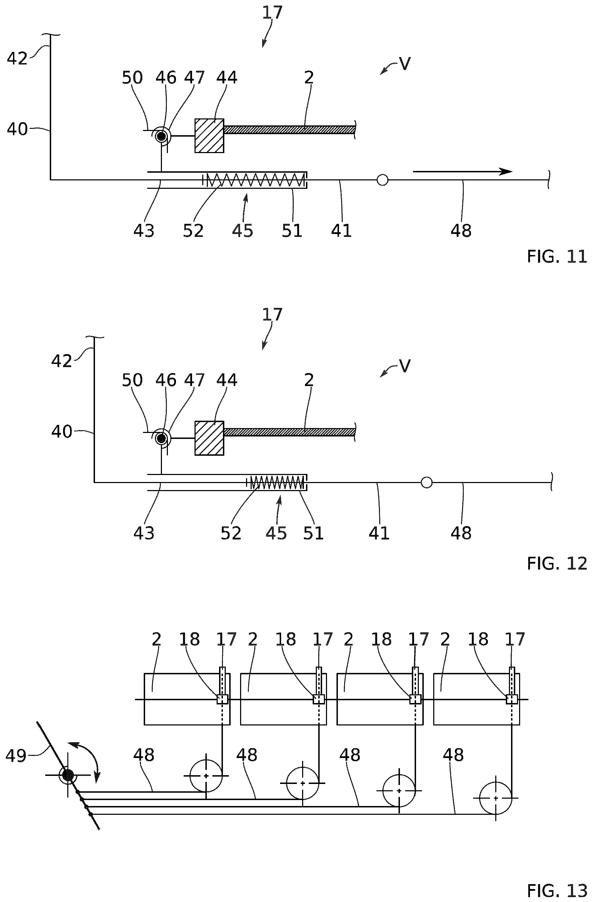

Sur les figures 11 à 13, on a représenté des modes de réalisation d'une potence 17 escamotable. C'est-à-dire une potence 17 qui peut occuper différentes positions S, T, V par rapport au panneau solaire 2 sur lequel elle est montée. Une telle potence 17 permet de limiter les ombres parasites projetées sur les panneaux solaires 2.Plus particulièrement, la potence 17 peut occuper une position déployée S, dite fonctionnelle, dans laquelle elle assure le support et le guidage du câble tracteur 7, et une position rétractée V, dite de repos, dans laquelle la potence 17 est placée en partie sous le panneau solaire 2. Entre la position déployée S et la position rétractée V, la potence 17 peut occuper une ou plusieurs positions intermédiaires T. En position déployée S, la potence 17 peut générer une ombre sur le panneau solaire 2, et limiter le rendement énergétique de ce dernier. En position rétractée V, la potence 17 est placée en partie sous le panneau solaire 2 de manière à ne plus générer d'ombre.

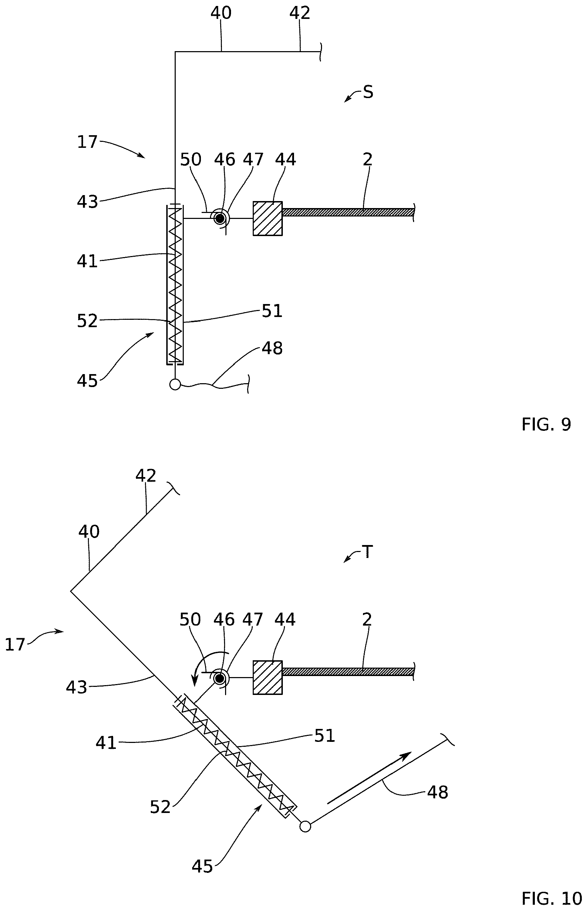

La potence 17 comporte une partie supérieure 40 et une partie inférieure 41. La partie supérieure 40 comprend une première extrémité 42 où sont montés les galets rotatifs 18, 80 et une deuxième extrémité 43 opposée reliée à la partie inférieure 41. Le panneau solaire 2 comprend un bord 44 sur lequel est reliée la potence 17. En outre, la potence 17 comprend un piston 45, un axe de pivotement 46, un élément de liaison 47 et une liaison actionneur 48. La partie inférieure 41 est intégrée dans le piston 45. Le piston 45 est relié à l'axe de pivotement 46. L'axe de pivotement 46 est logé au sein de l'élément de liaison 47. La liaison actionneur 48 relie la partie inférieure 41 à un actionneur 49. L'élément de liaison 47 est par exemple un étrier, il est relié au bord 44 du panneau solaire 2, par exemple par une vis ou par l'intermédiaire d'une pince ou un serre joint. Avantageusement, l'élément de liaison 47 est en partie ouvert pour autoriser un pivotement de l'axe de pivotement 46 par rapport à un axe parallèle au bord 44. Selon encore un autre avantage, la potence 17 comprend un ressort en torsion 50 monté sur l'axe de pivotement 46. Une des extrémités du ressort 50 est fixée sur l'axe de pivotement 46 et une autre extrémité est fixée sur l'élément de liaison 47 de manière à contraindre la potence 17 dans la position déployée S. Le piston 45 comprend un cylindre 51 et un système élastique 52, par exemple un ressort hélicoïdal ou un gaz. La liaison actionneur 48 peut être un élément souple, par exemple un câble, ou rigide, tel une barre. Lorsqu'on souhaite rétracter la potence 17, l'actionneur 49 exerce une tension sur l'élément de liaison 48, la potence 17 pivote autour de l'axe de pivotement 46 en prenant appui sur l'élément de liaison 47 et la potence 17 passe de la position déployée S à une position intermédiaire T, illustrée sur la figure 10. La tension exercée sur la liaison actionneur 48 provoque la bascule de la potence 17 autour de l'axe de pivotement 46. Sur la figure 11, la potence 17 occupe sa position rétractée V, et la tension sur la liaison actionneur 48 provoque une compression du piston 45, c'est-à-dire un coulissement de la partie inférieure 41 au sein du cylindre 51. Le coulissement entraine une translation des parties inférieure 41 et supérieure 40 de la potence 17 le long du panneau solaire 2. Sur la figure 12, la potence 17 occupe sa position rétractée V et le piston 45 est compressé. Lorsqu'on souhaite déployer la potence 17, l'actionneur 49 relâche la tension sur la liaison actionneur 48, et le piston 45 se décompresse. Lorsque le piston 45 se décompresse, la partie inférieure 41 de la potence 17 coulisse, sous l'effet du système élastique 52, vers l'extérieur du piston 45. Puis, du fait du ressort 50, la potence 17 retrouve sa position déployée S. Sur la figure 13, on a représenté un mode de réalisation dans lequel l'actionneur 49 est relié à plusieurs potences 17 par l'intermédiaire de plusieurs liaisons actionneur 48 respectives.

Avantageusement, lorsqu'on rétracte la ou les potences 17, on diminue en outre la tension exercée sur le câble tracteur 7. En particulier, on diminue la tension à l'aide du dispositif de mise en tension 11 qui peut faire varier la tension exercée sur le câble tracteur 7. Ainsi, en diminuant la tension exercée sur le câble tracteur 7, on peut rétracter les potences 17 tout en maintenant le câble tracteur 7 en contact avec les poulies d'entrainement 8, de renvoi 9 et de déviation 16. Par ailleurs, lorsqu'on souhaite mettre à nouveau le système de nettoyage 4 en fonctionnement, on déploie les potences 17, puis on augmente la tension exercée sur le câble tracteur 7 à l'aide du dispositif de mise en tension 11.

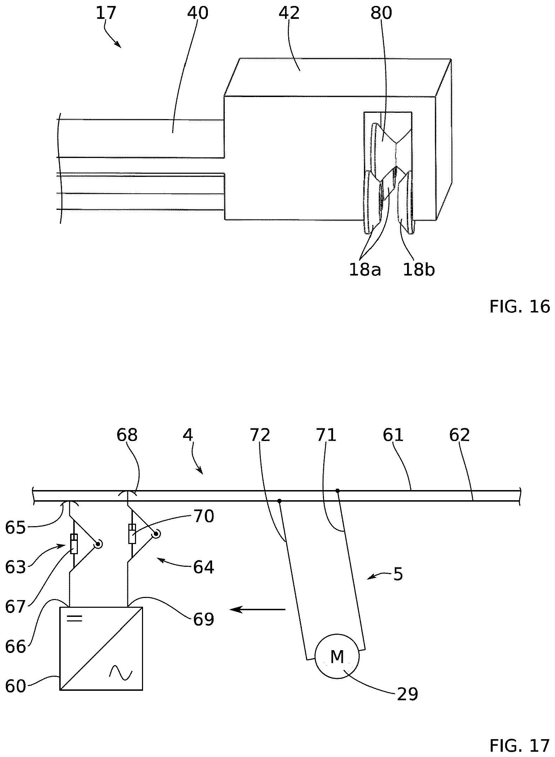

Dans le cas où l'élément de nettoyage 20 est motorisé à l'aide d'une unité d'entrainement 29 électrique, le système de nettoyage 4 comprend des moyens de fourniture d'une énergie électrique à l'unité d'entrainement 29 électrique de façon à pouvoir l'alimenter. Les moyens de fourniture peuvent être une unité de stockage d'énergie électrique, par exemple une batterie, de préférence une batterie de type lithium. Dans ce cas, chaque dispositif de nettoyage 5 comporte une unité de stockage d'énergie électrique, non représentée à des fins de simplification, montée sur le châssis 23 du dispositif 5. En variante, comme illustré sur la figure 17, les moyens de fourniture sont un générateur d'énergie électrique 60 couplé à l'unité d'entrainement 29 électrique par l'intermédiaire de fils électriques 61, 62 situés le long du câble tracteur 7. Le générateur 60 peut être situé sur le châssis moteur 14, pour en outre alimenter le moteur 10 de l'appareil de transport 6. Le générateur 60 peut correspondre au réseau public situé à distance et relié, par câbles électriques non représentés à des fins de simplification, aux fils électriques 61, 62, et au moteur 10.

Les unités d'entrainement 29 des dispositifs de nettoyage 5 sont, par exemple, des moteurs fonctionnant avec du 12 Volts continu monophasé. Ce niveau de tension est inférieur à du 25 Volts alternatif qui est considéré comme étant un seuil de danger pour l'homme en milieu humide.

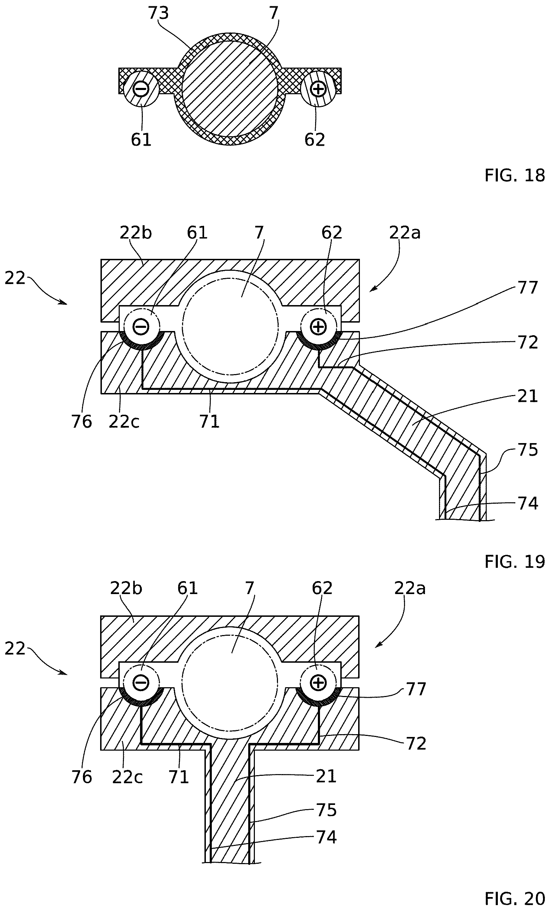

Comme illustré sur les figures 17 et 18, le câble tracteur 7 supporte les fils électriques 61, 62 et l'appareil de transport 6 comporte des moyens de connexion 63, 64 pour relier le générateur 60 aux fils électriques 61, 62 respectivement. En particulier, un premier moyen de connexion 63 comporte un premier connecteur 65 en contact avec un premier fil électrique 62. Le premier connecteur 65 est relié à une première borne 66 du générateur 60 par l'intermédiaire d'un premier tendeur amortisseur 67. Le deuxième moyen de connexion 64 comporte un deuxième connecteur 68 en contact avec le deuxième fil électrique 61. Le deuxième connecteur 68 est relié à une deuxième borne 69 du générateur 60 par l'intermédiaire d'un deuxième tendeur amortisseur 70.

Les premier et deuxième connecteurs 65, 68 peuvent être des patins qui frottent sur les fils électriques 61, 62. Les premier et deuxième tendeurs amortisseurs 67, 70 peuvent être des vérins pneumatiques, ou un ressort en compression. Les premier et deuxième tendeurs amortisseur 67, 70 maintiennent le contact entre les connecteurs 65, 68 et les fils électriques 61, 62, lorsque le câble tracteur 7 balance de haut en bas, par exemple en cas de vent.

Sur la figure 17, on a également représenté un dispositif de nettoyage 5 comprenant une unité d'entrainement 29 électrique reliée aux fils électriques 61, 62 par respectivement des fils de connexion 71, 72. Les fils de connexion 71, 72 s'étendent le long de la perche 21 du dispositif de nettoyage 5.

Sur la figure 18, on a représenté le câble tracteur 7 enveloppé d'une partie isolante 73. Les fils électriques 61, 62 sont logés en partie au sein de la partie isolante 73 de manière à être isolés entre eux et avec le câble tracteur 7. Les fils électriques 61, 62 sont situés le long du câble tracteur 7. En particulier, les fils électriques 61, 62 ont une partie extérieure visible, c'est-à-dire non isolée, destinée à être en contact avec les connecteurs 65, 68 des moyens de connexion 63, 64.

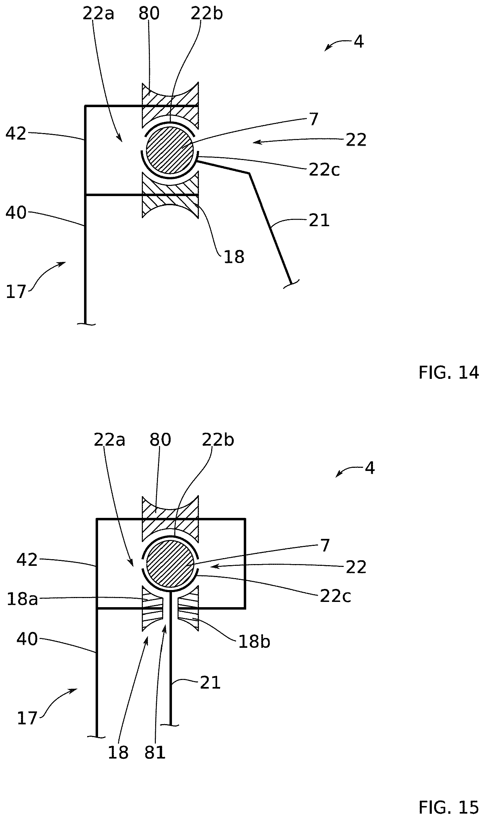

Sur les figures 14 à 16 on a représenté deux modes de réalisation d'une potence 17 et d'une perche 21 du dispositif de nettoyage 5 adaptée à la potence 17. Sur la figure 14, la potence 17 comporte un ou plusieurs galets rotatifs de support 18, situés sous le câble tracteur 7, destinés à supporter et guider le câble tracteur 7. En outre, la potence 17 comprend des galets rotatifs de compression 80, situés sur le câble tracteur 7, destinés à appuyer sur le câble tracteur 7 pour l'empêcher de sortir des galets rotatifs de support 18 et quitter la potence 17. Dans ce cas, la perche 21 s'étend latéralement par rapport au moyen de fixation 22 de façon à pouvoir passer à côté des galets rotatifs de support 18 tout en permettant au moyen de fixation 22 de passer sur les galets rotatifs de support 18 lorsque le dispositif de nettoyage 5 passe au niveau de la potence 17. Selon encore un autre avantage, on peut placer des galets rotatifs de support 18 au niveau de chacune des poulies d'entrainement 8, de renvoi 9 et de déviation 16, pour éviter que le câble tracteur 7 sorte des poulies 8, 9, 16 lors d'une opération d'escamotage des potences 17. Plus particulièrement, on peut placer un galet rotatif de support 18, en entrée de chaque poulie 8, 9, 16, c'est-à-dire au niveau où le câble tracteur 7 entre en contact avec la poulie 8, 9, 16, et également en sortie de chaque poulie 8, 9, 16, c'est-à-dire au niveau où le câble tracteur 7 sort de la poulie 8, 9, 16 avec laquelle il n'est plus en contact.

Sur les figures 15, 16, la potence 17 comporte un ou plusieurs galets rotatifs de support 18, situés sous le câble tracteur 7, destinés à supporter et guider le câble tracteur 7. En outre, la potence 17 comprend des galets rotatifs de compression 80, situés sur le câble tracteur 7, destinés à appuyer sur le câble tracteur 7 pour l'empêcher de sortir des galets rotatifs de support 18 et quitter la potence 17. En particulier, chaque galet rotatif de support 18 comporte deux demi galets rotatifs 18a, 18b placés en vis-à-vis et espacés l'un de l'autre par un écart 81 permettant un passage de la perche 21 du dispositif de nettoyage 5. L'écart 81 est en outre prévu pour que le câble tracteur 7 reste en contact avec les demi galets rotatifs 18a, 18b après le passage de la perche 21. Dans ce cas, la perche 21 s'étend au-dessous du moyen de fixation 22, en particulier à l'aplomb du câble tracteur 7, de façon à pouvoir passer entre les demi galets rotatifs 18a, 18b tout en permettant au moyen de fixation 22 de passer sur les demi galets rotatifs 18a, 18b lorsque le dispositif de nettoyage 5 passe au niveau de la potence 17.

Sur la figure 16, on a représenté une potence 17 adaptée aux perches 21 s'étendant au-dessous du moyen de fixation 2. Une telle potence 17 permet, en outre, d'emprisonner le câble tracteur 7 en évitant de perdre le câble tracteur 7 lors d'une opération d'escamotage des potences 17. Avantageusement, on peut également placer des demi galets rotatifs 18a, 18b en entrée et en sortie de chacune des poulies d'entrainement 8, de renvoi 9 et de déviation 16, pour éviter que le câble tracteur 7 sorte des poulies 8, 9, 16 lors d'une opération d'escamotage des potences 17.

Sur les figures 19 et 20, on a représenté deux modes de réalisation d'une pince de fixation 22a. De manière générale, la pince de fixation 22a comporte deux mâchoires 22b, 22c qui sont conformées pour enserrer le câble tracteur 7. En particulier, au moins une mâchoire 22b, 22c est mobile par rapport à l'autre. Par exemple, la mâchoire supérieure 22b est mobile par rapport à la mâchoire inférieure 22c qui est reliée mécaniquement à la perche 21. la mâchoire supérieure 22b s'ouvre pour placer la pince de fixation 22a autour du câble tracteur 7, puis on ferme la mâchoire supérieure 22b en la maintenant en contact avec la mâchoire inférieure 22c, par exemple au moyen d'un boulon de fixation, c'est-à-dire une vis coopérant avec un écrou, pour maintenir la pince de fixation 22a accrochée au câble tracteur 7. Sur la figure 19, on a représenté un mode de réalisation dans lequel la perche 21 s'étend latéralement par rapport à la pince de fixation 22a. Sur la figure 20, on a représenté un autre mode de réalisation dans lequel la perche 21 s'étend au-dessous de la pince de fixation 22a. On a également représenté sur les figures 19 et 20, deux modes de réalisation de la perche 21 et de la pince de fixation 22a adaptés à un dispositif de nettoyage 5 ayant un élément de nettoyage 20 motorisé. Dans ce cas, le dispositif de nettoyage 5 comporte deux fils de connexion 71, 72 situés le long de la perche 21. Chaque fil de connexion 71, 72 est entouré d'une gaine isolante pour isolé les fils entre eux et avec la perche 21. Chaque fil de connexion 71, 72 comporte une première extrémité 74, 75 reliée à une borne de l'unité d'entrainement 29 du dispositif de nettoyage 5, et une deuxième extrémité 76, 77 conformée pour être mise en contact avec les fils électriques 61, 62 respectifs de l'appareil de transport 6. Avantageusement, chaque deuxième extrémité 76, 77 peut être une plaque conductrice pour favoriser le contact électrique avec les fils électriques 61, 62.

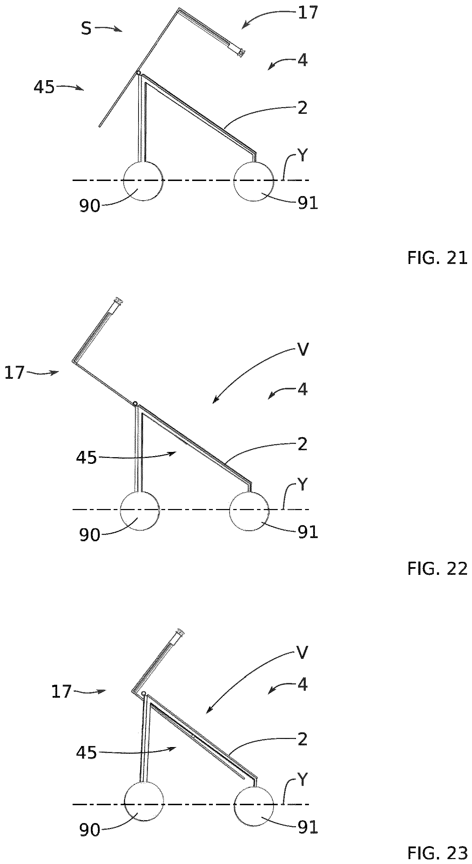

Sur les figures 21 à 22, on a représenté un autre mode de réalisation d'une centrale 1 à panneaux solaires 2. Dans ce mode de réalisation, les panneaux solaires 2 sont inclinés par rapport à une ligne Y passant par les supports 90, 91 des panneaux solaires 2. En d'autres termes, les panneaux solaires 2 forment un angle non nul et inférieur à 90° avec la ligne Y passant par les supports 90, 91.

Sur les figures 21 à 22 on a également représenté les différentes positions d'une potence 17 escamotable. Sur la figure 21, la potence 17 occupe une position déployée S. Sur la figure 22, la potence 17 occupe une position rétractée V dans laquelle le piston 45 est décompressé. Sur la figure 23, la potence 17 occupe une position rétractée V dans laquelle le piston 45 est compressé.

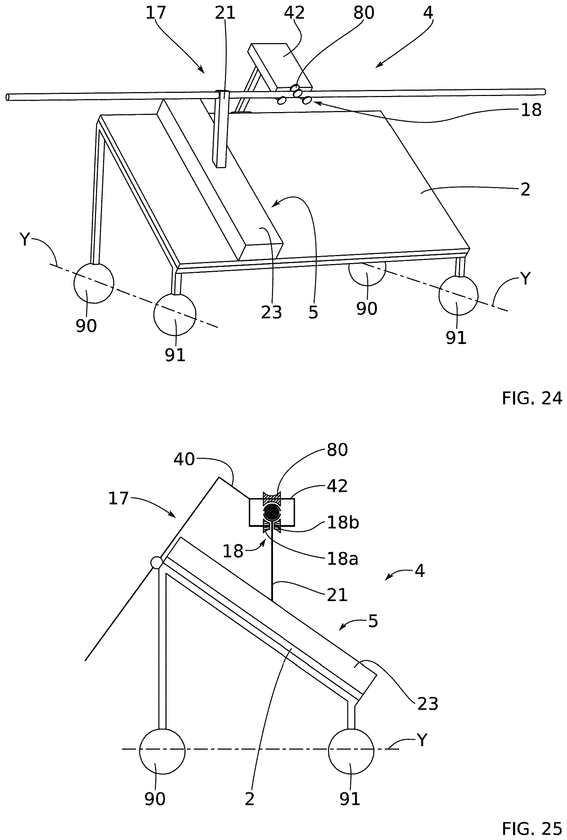

Sur les figures 24 et 25 on a également représenté un autre mode de réalisation d'une centrale 1 à panneaux solaires 2. Dans cet autre mode, les panneaux solaires 2 sont inclinés par rapport aux lignes Y passant par leurs supports 90, 91 respectifs. Le dispositif de nettoyage 5 comporte une perche 21 inclinée par rapport à son châssis 23. Avantageusement, l'inclinaison de la perche 21 est égale à l'inclinaison des panneaux solaires 2. On a également représenté une potence 17 ayant deux demi galets rotatifs 18a, 18b placés en vis-à-vis et espacés l'un de l'autre par un écart 81 permettant un passage de la perche 21 du dispositif de nettoyage 5. Dans ce cas, la perche 21 s'étend au-dessous de la pince de fixation 22a.

Un procédé de nettoyage pour centrale 1 à panneaux solaires 2 peut être mis en œuvre par le système de nettoyage 4 qui vient d'être décrit.

## Revendications

1. Système de nettoyage pour centrale à panneaux solaires (2), comprenant au moins un dispositif de nettoyage (5) d'au moins un panneau solaire (2), un appareil de transport (6) dudit au moins un dispositif de nettoyage (5) par câble tracteur (7), l'appareil de transport (6) comportant une poulie d'entrainement (8) du câble tracteur (7), **caractérisé en ce que** l'appareil de transport (6) comporte une poulie de renvoi (9) du câble tracteur (7), le câble tracteur (7) étant entrainé en continu autour des poulies d'entrainement (8) et de renvoi (9), et **en ce que** l'appareil de transport (6) comporte en outre une poulie de déviation (16) du câble tracteur (7) et ledit au moins un dispositif de nettoyage (5) est relié au câble tracteur (7) par une pince de fixation (22a) configurée pour passer au niveau des poulies d'entrainement (8), de déviation (16) et de renvoi (9).

2. Système selon la revendication 1, comprenant une potence (17) portant un élément rotatif (18, 18a, 18b) de support et de guidage du câble tracteur (7).

3. Système selon la revendication 2, dans lequel la potence (17) est escamotable.

4. Système selon l'une quelconque des revendications 1 à 3, dans lequel ledit au moins un dispositif de nettoyage (5) comporte un élément de nettoyage (20) motorisé et une unité d'entrainement (29) configurée pour entrainer en fonctionnement l'élément de nettoyage (20) motorisé.

5. Système selon la revendication 4, dans lequel l'unité d'entrainement (29) est électrique et ledit au moins un dispositif de nettoyage (5) comporte une unité de stockage d'énergie électrique couplée à l'unité d'entrainement (29).

6. Système selon la revendication 4, dans lequel l'unité d'entrainement (29) est électrique et l'appareil de transport (6) comporte un générateur d'énergie électrique (60) couplé à l'unité d'entrainement (29) par l'intermédiaire de fils électriques (61, 62) situés le long du câble tracteur (7).

7. Centrale à panneaux solaires (2), **caractérisée en ce qu'**elle comporte un système de nettoyage (4) selon l'une quelconque des revendications 1 à 6.

8. Centrale selon la revendication 7, dans laquelle chaque panneau solaire (2) comporte un support (90, 91) flottant.

9. Centrale selon la revendication 8, dans laquelle chaque panneau solaire (2) est un panneau photovoltaïque.

10. Centrale selon la revendication 7, dans laquelle chaque panneau solaire (2) comporte un support (90, 91) ancré au sol.

11. Procédé de nettoyage pour centrale à panneaux solaires (2), **caractérisé en ce qu'**il comporte une traction d'au moins un dispositif de nettoyage (5) d'au moins un panneau solaire (2) par câble tracteur (7) en utilisant un système de nettoyage selon l'une des revendications 1 à 6.

## Patentansprüche

1. Reinigungssystem für Kraftwerk mit Solarpanels (2), das mindestens eine Reinigungsvorrichtung (5) mindestens eines Solarpanels (2), ein Transportgerät (6) der mindestens einen Reinigungsvorrichtung (5) durch Zugkabel (7) umfasst, wobei das Transportgerät (6) eine Antriebsscheibe (8) des Zugkabels (7) umfasst, **dadurch gekennzeichnet, dass** das Transportgerät (6) eine Umlenkscheibe (9) des Zugkabels (7) umfasst, wobei das Zugkabel (7) kontinuierlich um die Antriebsscheibe (8) und die Umlenkscheibe (9) angetrieben ist, und dass das Transportgerät (6) außerdem eine Ablenkscheibe (16) des Zugkabels (7) umfasst, und die mindestens eine Reinigungsvorrichtung (5) mit dem Zugkabel (7) durch eine Befestigungszange (22a) verbunden ist, die dazu konfiguriert ist, im Bereich der Antriebs- (8), Ablenk- (16) und Umlenkscheibe (9) durchzugehen.

2. System nach Anspruch 1, das einen Ausleger (17) umfasst, der ein Drehelement (18, 18a, 18b) zum Tragen und Führen des Zugkabels (7) umfasst.

3. System nach Anspruch 2, wobei der Ausleger (17) einziehbar ist.

4. System nach einem der Ansprüche 1 bis 3, wobei die mindestens eine Reinigungsvorrichtung (5) ein motorisierte Reinigungselement (20) und eine Antriebseinheit (29) umfasst, die dazu konfiguriert ist, das motorisierte Reinigungselement (20) im Betrieb anzutreiben.

5. System nach Anspruch 4, wobei die Antriebseinheit (29) elektrisch ist und die mindestens eine Reinigungsvorrichtung (5) eine Stromspeichereinheit umfasst, die mit der Antriebseinheit (29) gekoppelt ist.

6. System nach Anspruch 4, wobei die Antriebseinheit (29) elektrisch ist und das Transportgerät (6) einen Stromgenerator (60) umfasst, der mit der Antriebseinheit (29) über Stromleiter (61, 62), die entlang des Zugkabels (7) liegen, gekoppelt ist.

7. Kraftwerk mit Solarpanels (2), **dadurch gekennzeichnet, dass** es ein Reinigungssystem (4) nach einem der Ansprüche 1 bis 6 umfasst.

8. Kraftwerk nach Anspruch 7, wobei jedes Solarpanel (2) einen schwimmenden Träger (90, 91) umfasst.

9. Kraftwerk nach Anspruch 8, wobei jedes Solarpanel (2) ein Fotovoltaikpanel ist.

10. Kraftwerk nach Anspruch 7, wobei jedes Solarpanel (2) einen am Boden verankerten Träger (90, 91) umfasst.

11. Reinigungsverfahren für Kraftwerk mit Solarpanels (2), **dadurch gekennzeichnet, dass** es ein Ziehen mindestens einer Reinigungsvorrichtung (5) mindestens eines Solarpanels (2) durch ein Zugkabel (7) unter Verwendung eines Reinigungssystems nach einem der Ansprüche 1 bis 6 umfasst.

## Claims

1. Cleaning system for solar power plant (2), comprising at least one device (5) for cleaning at least one solar panel (2), an appliance (6) for transporting said at least one cleaning device (5) by hoisting cable (7), the transport appliance (6) comprising a pulley (8) for driving the hoisting cable (7), **characterised in that** the transport appliance (6) comprises a pulley (9) for returning the hoisting cable (7), the hoisting cable (7) being continuously driven around the drive (8) and return (9) pulleys, and **in that** the transport appliance (6) further comprises a pulley (16) for deviating the hoisting cable (7) and said at least one cleaning device (5) is connected to the hoisting cable (7) by a fixing clamp (22a) configured to pass at the drive (8), deviation (16) and return (9) pulleys.

2. System according to claim 1, comprising a stem (17) carrying a rotary element (18, 18a, 18b) for supporting and guiding the hoisting cable (7).

3. System according to claim 2, wherein the stem (17) is retractable.

4. System according to any one of claims 1 to 3, wherein said at least one cleaning device (5) comprises a motorised cleaning element (20) and a drive unit (29) configured to drive the motorised cleaning element (20) in operation.

5. System according to claim 4, wherein the drive unit (29) is electric and said at least one cleaning device (5) comprises an electric energy storage unit coupled with the drive unit (29).

6. System according to claim 4, wherein the drive unit (29) is electric and the transport appliance (6) comprises an electric energy generator (60) coupled with the drive unit (29) through electric wires (61, 62) located along the hoisting cable (7).

7. Solar power plant (2), **characterised in that** it comprises a cleaning system (4) according to any one of claims 1 to 6.

8. Power plant according to claim 7, wherein each solar panel (2) comprises a floating support (90, 91).

9. Power plant according to claim 8, wherein each solar panel (2) is a photovoltaic panel.

10. Power plant according to claim 7, wherein each solar panel (2) comprises a support (90, 91) anchored to the ground.

11. Cleaning method for a solar power plant (2), **characterised in that** it comprises a hoisting of at least one cleaning device (5) of at least one solar panel (2) by a hoisting cable (7), while using a cleaning system according to any one of claims 1 to 6.
